# FASCICULE DE BREVET EUROPEEN

(11) **EP 3 585 582 B1**
(45) Date de publication et mention de la délivrance du brevet: **02.04.2025**
(21) Numéro de dépôt: 18709703.5
(22) Date de dépôt: 26.02.2018
(51) Int. Cl.: B29C 45/14, B60J 1/00, B60J 7/00, C09D 123/12, C09D 123/16, C08L 23/12, C08L 23/16, C08L 25/08, B60J 10/16, B60J 10/18

(54) **VITRAGE DE VEHICULE AUTOMOBILE**
KRAFTFAHRZEUGVERGLASUNG
MOTOR VEHICLE GLAZING

(30) Priorité: 27.02.2017 FR 1751577; 25.08.2017 FR 1757892
(43) Date de publication de la demande: 01.01.2020
(73) Titulaire: SAINT-GOBAIN GLASS FRANCE, 92400 Courbevoie (FR)
(72) Inventeur: STRICHER, Arthur, 60280 Margny les Compiegne (FR); KLEO, Christophe, 60350 Attichy (FR); GRANDGIRARD, Bastien, 60490 Marqueglise (FR); PIROUX, Fabienne, 60200 Compiegne (FR); BLANC, Olivier, 60170 Tracy Le Mont (FR)
(74) Mandataire: Saint-Gobain Recherche
(86) Numéro de dépôt international: PCT/FR2018/050447
(87) Numéro de publication internationale: WO 2018/154257

(56) Documents cités:
- EP-A1- 2 803 701
- WO-A1-2015/145021
- WO-A1-2015/145021
- FR-A1- 2 856 003
- FR-A1- 2 856 003
- US-A1- 2005 091 935
- US-A1- 2014 178 635

## Description

La présente invention concerne un vitrage de véhicule automobile, notamment un toit vitré, comprenant une vitre un joint élastomère thermoplastique et éventuellement un insert métallique surmoulé par le joint élastomère thermoplastique.

Dans le domaine industriel des vitrages de véhicules automobiles (aussi communément appelé vitrages automobiles par abus de langage), le terme « encapsulation » désigne un procédé ou une étape de surmoulage d'une matière polymérique autour du périmètre d'une vitre. Une composition d'encapsulation contenant la matière polymérique ou des précurseurs de la matière polymérique, est injectée à l'état de fluide plus ou moins visqueux dans un moule formant une cavité étanche autour du bord de la vitre. Après durcissement de la composition, par refroidissement ou réticulation, le moule est ouvert et retiré, laissant en périphérie de la vitre un cordon profilé en contact avec la tranche et avec au moins une des deux faces de la vitre.

Le polymère durci qui forme le cordon profilé est souvent un élastomère capable de jouer le rôle de joint entre le vitrage et la carrosserie.

Les élastomères les plus communément utilisés en tant que matière d'encapsulation pour la fabrication de toits vitrés de véhicules automobiles sont des polyuréthanes obtenus par moulage par injection-réaction (RIM de l'anglais *reaction injection moulding*)*.* Les précurseurs, monomères ou oligomères, généralement des polyols et polyisocyanates, sont injectés dans le moule où ils réagissent pour former un réseau tridimensionnel réticulé. Deux types de polyisocyanates sont utilisés dans les compositions d'encapsulation RIM : les polyisocyanates aromatiques et les polyisocyanates aliphatiques. Les polyisocyanates aromatiques sont connus pour être plus réactifs et permettent de réduite efficacement les cycles de production. Ils sont également moins coûteux et présentent une meilleure résistance aux solvants. FR 2 856 003 A1 divulgue un vitrage avec une encapsulation en PU-RIM.

Les polyuréthanes présentent cependant l'inconvénient de d'être sensible au vieillissement UV, qui peuvent provoquer une dégradation de la couleur, des fissures ou une fragilité sur les surface exposées.

Plusieurs solutions ont été avances pour améliorer la résistance aux UV des polyuréthanes, parmi lesquelles le développement de catalyseurs spécifiques, l'optimisation de la stœchiométrie entre les réactifs ou encore l'addition de stabilisants UV.

La présente invention propose une solution alternative à l'utilisation de polyuréthanes afin de résoudre ce problème de sensibilité aux UV. Il a en effet mis en évidence que l'utilisation de certains polymères thermoplastiques et en particulier d'élastomères thermoplastiques (TPE) pour l'encapsulation de vitrages de véhicules automobiles constitue une alternative très intéressante aux élastomères thermodurcis obtenus par RIM vis-à-vis de la résistance aux UV.

Par ailleurs, l'utilisation de TPE présente d'autres avantages intéressants : les joints de vitrages de véhicules automobiles à base de TPE sont en effet recyclables, ce qui n'est pas le cas des joints à base de polyuréthanes RIM ; et l'utilisation de TPE fait disparaître les problèmes liés à l'utilisation de monomères volatils réactifs et toxiques tels que des isocyanates.

La présente invention a donc pour objet un vitrage de véhicule automobile comprenant une vitre, un joint élastomère thermoplastique et éventuellement un insert métallique surmoulé par le joint élastomère thermoplastique, ledit joint comprenant un compound PP/TPE comprenant de 38 à 80 % en poids, de préférence de 40 à 75 % en poids et en particulier de 45 à 70 % en poids de polypropylène (PP).

Le joint peut comprendre en général jusqu'à 5% en poids, de préférence moins de 3% ou même moins de 1% en poids, d'un agent de couplage tel qu'un alcoxysilane fonctionnel. Dans un mode de réalisation particulier, le joint est exempt d'alcoxysilane fonctionnel.

La vitre à encapsuler peut être une vitre en verre minéral ou bien en en matière plastique. Elle peut être constituée d'une seule feuille de verre ou de matière plastique ou bien d'une vitre feuilleté formée de deux ou plus de deux feuilles de verre ou de plastique, collées l'une à l'autre au moyen de ce qu'on appelle classiquement un intercalaire de feuilletage, constitué généralement de poly(butyral de vinyle) (PVB) ou de copolymère poly(éthylène-acétate de vinyle) (EVA).

La ou les feuilles de verre et l'intercalaire de feuilletage peuvent être colorés, la vitre dans son ensemble conservant cependant une certaine transparence, avec une transmission lumineuse (TL) qui est de préférence comprise entre 10 et 50 %, en particulier entre 15 et 40%.

Dans un mode de réalisation préféré du procédé de l'invention, la vitre est une vitre feuilletée constituée de deux feuilles de verre minéral collées l'une à l'autre au moyen d'un intercalaire de feuilletage.

Le vitrage selon l'invention est de préférence un toit vitré, un tel vitrage étant particulièrement exposé aux UV. Les dimensions de la vitre sont de préférence telles que son périmètre est au moins égal à 1,0 m, de préférence compris entre 1,0 et 8,0 m, en particulier entre 1,3 et 4,5 m, idéalement entre 1,5 et 4,0 m.

Le vitrage selon l'invention peut comprendre un ou plusieurs inserts métalliques surmoulés par le joint élastomère thermoplastique. Les inserts métalliques peuvent jouer le rôle de renforts mécanique et/ou de support. De tels inserts métalliques, notamment de grande taille, s'avèrent nécessaire pour les vitrages automobiles complexes tels que des toits vitrés, notamment des toits ouvrants vitrés. Les vitrages automobiles peuvent également comprendre d'autres pièces, partiellement ou complètement incorporées dans l'encapsulation, telles que des pions de centrage ou des supports latéraux (side brackets).

L'insert métallique a de préférence des dimensions assez importantes, par exemple une longueur proche d'une des dimensions de la vitre, par exemple une longueur comprise entre 10 cm et 1,5 m, en particulier entre 15 cm et 1,2 m.

La surface de l'insert métallique surmoulé, et donc en contact avec le joint élastomère thermoplastique, peut être une surface de contact inférieure à 10 cm². Il s'agit cependant de préférence d'une surface de contact de plusieurs dizaines de centimètres carrés, voire de plusieurs centaines de centimètres carrés, en particulier comprise entre 10 cm² et 1000 cm².

Le terme « élastomère thermoplastique (TPE) » désigne des matériaux polymères hétérogènes comportant des domaines rigides (ou durs) et des domaines souples (ou mous). Ces matériaux ont un comportement d'élastomère dans un domaine limité de températures englobant la température ambiante, et adoptent, à des températures supérieures à la température de ramollissement des domaines rigides, un comportement plastique et peuvent par conséquent être mis en œuvre comme des polymères thermoplastiques.

Les élastomères thermoplastiques sont connus et leur nomenclature et classification est définie dans la norme ISO 18064.

Les élastomères thermoplastiques utilisés pour le procédé selon l'invention sont de préférence choisis dans le groupe constitué des polymères suivants :
- le caoutchouc éthylène-propylène-diène monomère (EPDM) non vulcanisé,
- le caoutchouc éthylène-propylène-diène monomère (EPDM) partiellement vulcanisé, et
- les élastomères thermoplastiques styréniques (TPE-S) tels que les copolymères à blocs poly(styrène-b-butadiène-b-styrène) (SBS), les copolymères à blocs poly(styrène-b-(éthylène-butylène)-b-styrène) (SEBS) et les copolymères à blocs poly(styrène-b-(éthylène-propylène)-b-styrène) (SEPS).

Lorsque ces TPE sont mélangés avec du polypropylène, le compound TPE/PP obtenu présente également des propriétés d'élastomère thermoplastique, c'est-à-dire un comportement élastique dans un certain de domaine de température englobant la température ambiante (20 °C) et un comportement thermoplastique au-delà de ce domaine de température.

Le polypropylène augmente également de manière avantageuse la dureté Shore A des joints obtenus.

Le vitrage selon l'invention présente une très bonne résistance aux rayonnements UV de sorte la variation de couleur ΔE*, mesurée selon la norme ISO 11664, est inférieur à 1 après un vieillissement de 1000h à l'aide d'un weather-o-meter (WoM) pendant 1000h selon les conditions définies par la norme SAE J1960. Ainsi, un autre objet de la présente invention concerne l'utilisation d'un joint d'encapsulation comprenant un compound PP/TPE comprenant de 38 à 80 % en poids, de préférence de 40 à 75 % en poids et en particulier de 45 à 70 % en poids de PP, pour améliorer la résistance aux rayonnements UV d'un vitrage de véhicule automobile.

La présente demande a également pour objet un procédé de fabrication d'un vitrage de véhicule automobile comprenant une vitre, un joint élastomère et éventuellement un insert métallique surmoulé par le joint élastomère, comprenant
- l'insertion du bord d'une vitre et éventuellement d'un insert métallique dans un moule d'encapsulation formant une cavité étanche autour du bord de la vitre,
- le remplissage de la cavité étanche contenant le bord de la vitre et éventuellement l'insert métallique, par injection d'une composition d'encapsulation comprenant un compound polypropylène (PP)/élastomère thermoplastique (TPE) à l'état fondu,
- le refroidissement de la composition d'encapsulation de manière à former un joint élastomère dans lequel est intégré l'insert métallique,
- le démoulage du joint élastomère dans lequel est intégré l'insert métallique,
le procédé étant caractérisé par le fait que ledit compound PP/TPE comprend de 38 à 80 % en poids, de préférence de 40 à 75 % en poids et en particulier de 45 à 70 % en poids de polypropylène (PP).

La composition d'encapsulation utilisée dans le vitrage automobile selon l'invention peut comprendre, en plus du compound TPE/PP, un ou plusieurs additifs qui ont principalement pour fonction de réduire la viscosité de la composition d'encapsulation à chaud, de favoriser l'adhésion de cla composition à la vitre, de diminuer les coûts du matériau final obtenu, et/ou d'augmenter la stabilité physique ou chimique du matériau final obtenu.

Afin de favoriser l'adhésion du joint à la vitre, la composition d'encapsulation peut comprendre en général jusqu'à 5% en poids, de préférence moins de 3% ou même moins de 1% en poids, rapporté au poids total de la composition d'encapsulation, d'un agent de couplage tel qu'un alcoxysilane fonctionnel. Dans un mode de réalisation particulier, le joint est exempt d'alcoxysilane fonctionnel.

Les additifs réducteurs de coûts sont par exemple des charges minérales telles que craie, kaolin, talc, oxyde de zinc et noir de carbone. Ils peuvent être présents en une quantité comprise typiquement entre 1 et 15 %, de préférence entre 2 et 10 % en poids, rapporté au poids total de la composition d'encapsulation. La présence de telles charges minérales augmente la dureté Shore A des joints formés.

Les huiles, de préférence des huiles minérales, servent d'adjuvants de mise en œuvre et permettant de réduire la température de transition vitreuse et de fluidifier la composition d'encapsulation chaude. Elles sont présentes par exemple à raison de 10 à 50 %, de préférence de 20 à 45 % en poids, rapporté au poids total de la composition d'encapsulation. Leur présence a peu d'effet sur la dureté du joint final.

Et enfin, des agents stabilisants anti-oxydants ou anti-UV peuvent également être présents en faible quantité, généralement inférieure à 1 % en poids.

La quantité totale de tels additifs ne doit cependant pas dépasser une limite supérieure d'environ 30 à 35 % en poids et la composition d'encapsulation comprend de préférence entre 35 et 65% en poids, de préférence entre 45 % et 60 % en poids, et en particulier entre 50 et 57 % en poids de compound PP/TPE, rapporté au poids total de la composition d'encapsulation.

Des compositions d'encapsulation prête à l'emploi contenant un compound PP/TPE et des additifs (huiles minérales/charges minérales/agents stabilisants) sont disponibles sur le marché auprès des sociétés TEKNOR APEX, EXXON, KRAIBURG, MCPP, MULTIBASE.

La composition d'encapsulation est injectée de préférence à une température comprise entre 170°C et 260°C, en particulier entre 170°C et 220°C, sous une pression comprise entre 15 bars et 120 bars, de préférence entre 15 bars et 80 bars.

Le « durcissement » de la composition d'encapsulation se fait par simple refroidissement, actif ou passif, de préférence actif, du moule et de la matière d'encapsulation. Autrement dit, l'étape de durcissement ne comprend pas d'étape de chauffage en vue de la réticulation chimique de la composition d'encapsulation.

Le démoulage du joint se fait avantageusement avant refroidissement complet jusqu'à température ambiante, par exemple à une température comprise entre 40 et 120°C.

Les inserts métalliques surmoulés peuvent être en n'importe quel matériau métallique. Ils sont de préférence en acier. Ils peuvent éventuellement être recouverts d'un revêtement de surface, organique ou minéral, comme par exemple une couche de peinture déposée par cataphorèse, qui les protège efficacement contre la corrosion.

La présente invention est illustrée par les exemples suivants non limitatifs.

### Exemples

Un vitrage automobile selon l'invention (exemple 1) obtenu par encapsulation d'une vitre en verre minéral à l'aide d'un TPE comprenant un compound PP/TPE comprend de 38 à 80 % en poids de PP et deux vitrages automobiles comparatifs (exemples 2 et 3) obtenus par encapsulation d'une vitre en verre minéral à l'aide d'une composition d'encapsulation RIM comprenant d'une par des polyisocyanates aromatiques (exemple 2) et d'autre part des polyisocyanates aliphatiques (exemple 3).

Ces trois vitrages ont été soumis à un cycle de vieillissement accéléré à l'aide d'un weather-o-meter (WoM) pendant 1000h selon les conditions définies par la norme SAE J1960. Chacune des compositions d'encapsulation comprenant une quantité identique de charge de noir de carbone, les joints d'encapsulation obtenus présentent tous une teinte noir profond avant vieillissement. Afin de déterminer l'effet du vieillissement UV sur les joint d'encapsulation, les valeurs de ΔE* ont été calculées à partir des mesures de couleur L*a*b* selon la norme ISO 11664, sous illuminant D65, observateur à 2°, réalisées au niveau du joint avant et après vieillissement. La solidité de la couleur a également été évaluée sur une échelle de gris telle que définie par la norme EN 20105-A02 : 1994, l'indice 5 correspondant à la teinte noir profond des joint avant vieillissement. Les résultats sont présentés dans le tableau suivant.

| Echantillon | Matériau d'encapsulation | ΔE* | Echelle de gris |
|---|---|---|---|
| Ex1 | Compound PP/TPE | < 1 | 4-5 |
| Ex2 | PU-RIM aromatique | > 8 | 2 |
| Ex3 | PU-RIM aliphatique | < 2 | 3 |

Les vitrages des exemples comparatifs 2 et 3 présentent une dégradation importante de leur couleur après vieillissement comme le montrent les valeurs de ΔE* élevées et/ou les faibles notes sur l'échelle de gris. Au contraire, le vitrage de l'exemple 1 selon l'invention présente n'est que peu affecté par le vieillissement UV.

## Revendications

1. Vitrage de véhicule automobile comprenant une vitre et un joint élastomère thermoplastique, **caractérisé en ce que** ledit joint comprend un compound PP/TPE comprenant de 38 à 80 % en poids, de préférence de 40 à 75 % en poids et en particulier de 45 à 70 % en poids de polypropylène (PP).

2. Vitrage selon la revendication 1, **caractérisé en ce qu'**il comprend un insert métallique, au moins un pion de centrage ou au moins un support latéral (side brackets) surmoulé par le joint élastomère thermoplastique.

3. Vitrage selon l'une des revendications 1 ou 2, **caractérisé en ce que** le TPE est choisi parmi
- le caoutchouc éthylène-propylène-diène monomère (EPDM) non vulcanisé,
- le caoutchouc éthylène-propylène-diène monomère (EPDM) partiellement vulcanisé, et
- les élastomères thermoplastiques styréniques (TPE-S) tels que les copolymères à blocs poly(styrène-b-butadiène-b-styrène) (SBS), les copolymères à blocs poly(styrène-b-(éthylène-butylène)-b-styrène) (SEBS) et les copolymères à blocs poly(styrène-b-(éthylène-propylène)-b-styrène) (SEPS).

4. Vitrage selon l'une des revendications 1 à 3, **caractérisé en ce que** le joint comprend jusqu'à 5% en poids, de préférence moins de 3% ou même moins de 1% en poids, d'un agent de couplage.

5. Vitrage selon l'une des revendications 1 à 4, **caractérisé en ce que** le joint est exempt d'alcoxysilane fonctionnel.

6. Procédé de fabrication d'un vitrage de véhicule automobile comprenant une vitre, un joint élastomère et un insert métallique surmoulé par le joint élastomère, comprenant
- l'insertion du bord d'une vitre et d'un insert métallique dans un moule d'encapsulation formant une cavité étanche autour du bord de la vitre,
- le remplissage de la cavité étanche contenant le bord de la vitre et l'insert métallique, par injection d'une composition d'encapsulation comprenant un compound polypropylène (PP)/élastomère thermoplastique (TPE) à l'état fondu,
- le refroidissement de la composition d'encapsulation de manière à former un joint élastomère dans lequel est intégré l'insert métallique,
- le démoulage du joint élastomère dans lequel est intégré l'insert métallique,
le procédé étant **caractérisé par le fait que** ledit compound PP/TPE comprend de 38 à 80 % en poids, de préférence de 40 à 75 % en poids et en particulier de 45 à 70 % en poids de polypropylène (PP), et **par le fait que** l'insert métallique est recouvert sur toute sa surface susceptible de venir en contact avec la composition d'encapsulation, d'un revêtement en polypropylène.

7. Procédé selon la revendication 6, **caractérisé en ce que** la composition d'encapsulation comprend jusqu'à 5% en poids, de préférence moins de 3% ou même moins de 1% en poids, d'un agent de couplage.

8. Procédé selon l'une des revendications 6 ou 7, **caractérisé en ce que** le joint est exempt d'alcoxysilane fonctionnel.

9. Procédé selon l'une des revendications 6 à 8, **caractérisé en ce que** la composition d'encapsulation contient en outre des charges minérales telles que craie, kaolin, talc, oxyde de zinc et noir de carbone, des adjuvants de mise en œuvre tels que des huiles, de préférence des huiles minérales, ou des agents stabilisants anti-oxydants ou anti-UV.

10. Procédé selon l'une des revendications 6 à 9, **caractérisé par le fait que** la composition d'encapsulation comprend entre 35 et 65% en poids, de préférence entre 45 % et 60 % en poids, en particulier entre 50 et 57 % en poids de compound PP/TPE, rapporté au poids total de la composition d'encapsulation.

## Patentansprüche

1. Kraftfahrzeugverglasung, umfassend eine Glasscheibe und eine Dichtung aus thermoplastischem Elastomer, **dadurch gekennzeichnet, dass** die Dichtung eine PP/TPE-Verbindung umfasst, umfassend zu 38 bis 80 Gew.-%, vorzugsweise zu 40 bis 75 Gew.-% und insbesondere zu 45 bis 70 Gew.-% Polypropylen (PP).

2. Verglasung nach Anspruch 1, **dadurch gekennzeichnet, dass** sie einen Metalleinsatz, mindestens einen Zentrierstift oder mindestens eine seitliche Halterung (side brackets) umfasst, die durch die Dichtung aus thermoplastischem Elastomerdichtung umspritzt ist.

3. Verglasung nach einem der Ansprüche 1 oder 2,
**dadurch gekennzeichnet, dass** das TPE ausgewählt ist aus
- unvulkanisiertem Ethylen-Propylen-Dien-Monomer-Kautschuk (EPDM),
- teilweise vulkanisiertem Ethylen-Propylen-Dien-Monomer-Kautschuk (EPDM), und
- thermoplastischen Styrol-Elastomeren (TPE-S) wie Poly(styrol-b-butadien-b-styrol)-Blockcopolymeren (SBS-Blockcopolymere), Poly(styrol-b-(ethylen-butylen)-b-styrol)-Blockcopolymeren (SEBS-Blockcopolymere) und Poly(styrol-b-(ethylen-propylen)-b-styrol)-Blockcopolymeren (SEPS-Blockcopolymere).

4. Verglasung nach einem der Ansprüche 1 bis 3,
**dadurch gekennzeichnet, dass** die Dichtung bis zu 5 Gew.-%, vorzugsweise zu weniger als 3 Gew.-% oder sogar zu weniger als 1 Gew.-% einen Haftvermittler umfasst.

5. Verglasung nach einem der Ansprüche 1 bis 4,
**dadurch gekennzeichnet, dass** die Dichtung ohne funktionelles Alkoxysilan ist.

6. Verfahren zum Herstellen einer Kraftfahrzeugverglasung, umfassend eine Glasscheibe, eine Elastomerdichtung und einen Metalleinsatz, der durch die Elastomerdichtung umspritzt ist, umfassend
- Einsetzen des Randes einer Glasscheibe und eines Metalleinsatzes in eine Verkapselungsform, die einen undurchlässigen Hohlraum um den Rand der Glasscheibe herum ausbildet,
- Füllen des undurchlässigen Hohlraums, der den Rand der Glasscheibe und den Metalleinsatz enthält, durch Einspritzen einer Verkapselungszusammensetzung, umfassend eine Verbindung aus Polypropylen (PP) und thermoplastischem Elastomer (TPE) in geschmolzenem Zustand,
- Abkühlen der Verkapselungszusammensetzung, um eine Elastomerdichtung auszubilden, in die der Metalleinsatz eingebettet ist,
- Entformen der Elastomerdichtung, in die der Metalleinsatz eingebettet ist,
wobei das Verfahren **dadurch gekennzeichnet ist, dass** die PP/TPE-Verbindung zu 38 bis 80 Gew.-%, vorzugsweise zu 40 bis 75 Gew.-% und insbesondere zu 45 bis 70 Gew.-% Polypropylen (PP) umfasst, und **dadurch, dass** der Metalleinsatz auf seiner gesamten Oberfläche, die geeignet ist, um mit der Verkapselungszusammensetzung in Kontakt zu kommen, mit einer Polypropylenbeschichtung überzogen ist.

7. Verfahren nach Anspruch 6, **dadurch gekennzeichnet, dass** die Verkapselungszusammensetzung bis zu 5 Gew.-%, vorzugsweise zu weniger als 3 Gew.-% oder sogar zu weniger als 1 Gew.-% einen Haftvermittler umfasst.

8. Verfahren nach einem der Ansprüche 6 oder 7,
**dadurch gekennzeichnet, dass** die Dichtung ohne funktionelles Alkoxysilan ist.

9. Verfahren nach einem der Ansprüche 6 bis 8,
**dadurch gekennzeichnet, dass** die Verkapselungszusammensetzung ferner mineralische Füllstoffe wie Kreide, Kaolin, Talkum, Zinkoxid und Ruß, Verarbeitungshilfsstoffe wie Öle, vorzugsweise Mineralöle, oder antioxidative Stabilisatoren oder UV-Schutzmittel enthält.

10. Verfahren nach einem der Ansprüche 6 bis 9,
**dadurch gekennzeichnet, dass** die Verkapselungszusammensetzung bezogen auf das Gesamtgewicht der Verkapselungszusammensetzung zu zwischen 35 und 65 Gew.-%, vorzugsweise zu zwischen 45 und 60 Gew.-%, insbesondere zu zwischen 50 und 57 Gew.-% die PP/TPE-Verbindung umfasst.

## Claims

1. Glazing for motor vehicles comprising a window glass and a thermoplastic elastomer seal, **characterized in that** said seal comprising a PP/TPE compound comprises from 38 to 80 wt%, preferably from 40 to 75 wt% and in particular from 45 to 70 wt% of polypropylene (PP).

2. The glazing as claimed in claim 1, **characterized in that** it comprises a metal insert, at least one locating pin or at least one side bracket overmolded by the thermoplastic elastomer seal.

3. The glazing as claimed in one of claims 1 or 2, **characterized in that** the TPE is selected from
- unvulcanized ethylene-propylene-diene monomer (EPDM) rubber,
- partially vulcanized ethylene-propylene-diene monomer (EPDM) rubber, and
- styrene thermoplastic elastomers (TPE-S) such as poly(styrene-b-butadiene-b-styrene) block copolymers (SBS), poly(styrene-b-(ethylene-butylene)-b-styrene) block copolymers (SEBS) and poly(styrene-b-(ethylene-propylene) -b-styrene) block copolymers (SEPS).

4. The glazing as claimed in one of claims 1 to 3, **characterized in that** the seal comprises up to 5 wt%, preferably less than 3 wt% or even less than 1 wt% of a coupling agent.

5. The glazing as claimed in one of claims 1 to 4, **characterized in that** the seal is free from functional alkoxysilane.

6. A method for manufacturing glazing for motor vehicles comprising a window glass, an elastomer seal and a metal insert overmolded by the elastomer seal, comprising
- inserting the edge of a window glass and of a metal insert in an encapsulation mold forming a hermetic cavity around the edge of the window glass,
- filling the hermetic cavity containing the edge of the window glass and the metal insert, by injecting an encapsulating composition comprising a polypropylene (PP)/thermoplastic elastomer (TPE) compound in the molten state,
- cooling the encapsulating composition so as to form an elastomer seal in which the metal insert is incorporated,
- mold release of the elastomer seal in which the metal insert is incorporated,
the method being **characterized in that** said PP/TPE compound comprises from 38 to 80 wt%, preferably from 40 to 75 wt% and in particular from 45 to 70 wt% of polypropylene (PP), and **in that** the metal insert is covered with a polypropylene coating on all of its surface that may come into contact with the encapsulating composition.

7. The method as claimed in claim 6, **characterized in that** the encapsulating composition comprises up to 5 wt%, preferably less than 3 wt% or even less than 1 wt% of a coupling agent.

8. The method as claimed in one of claims 6 or 7, **characterized in that** the seal is free from functional alkoxysilane.

9. The method as claimed in one of claims 6 to 8, **characterized in that** the encapsulating composition additionally contains mineral fillers such as chalk, kaolin, talc, zinc oxide and carbon black, application aids such as oils, preferably mineral oils, or antioxidant or anti-UV stabilizers.

10. The method as claimed in one of claims 6 to 9, **characterized in that** the encapsulating composition comprises between 35 and 65 wt%, preferably between 45 wt% and 60 wt%, in particular between 50 and 57 wt% of PP/TPE compound, relative to the total weight of the encapsulating composition.
